(19) Europäisches Patentamt

European Patent Office

Office européen des brevets

(11) Publication number: **0 234 012 B1**

# (12) EUROPEAN PATENT SPECIFICATION

(45) Date of publication of patent specification: **08.05.91** (51) Int. Cl.⁵: **A23L 1/333**

(21) Application number: **86116754.2**

(22) Date of filing: **02.12.86**

(54) A process for the manufacture of reconstituted squid.

(30) Priority: **24.02.86 ES 552332**

(43) Date of publication of application:
**02.09.87 Bulletin 87/36**

(45) Publication of the grant of the patent:
**08.05.91 Bulletin 91/19**

(84) Designated Contracting States:
**AT BE CH DE FR GB GR IT LI LU NL SE**

(56) References cited:
**GB-A- 1 511 228**

**JOURNAL OF FOOD SCIENCE, vol. 48, no. 4, July-August 1983, pages 1048-1052, Chicago, Illinois, US; R.K. ROCKOWER et al.: "Effect of soy flour, soy protein concentrate and sodium alginate on the textural attributes of minced fish patties"**

(73) Proprietor: **PESCANOVA, S.A.**
**Apartado No. 424**
**ES-36080 Vigo (Pontevedra)(ES)**

(72) Inventor: **Irisarri Castro, José**
**Marques de Valladares, 33-1.**
**Vigo (Pontevedra)(ES)**

(74) Representative: **Ungria Lopez, Javier et al**
**Avda. Ramon y Cajal, 78**
**E-28043 Madrid(ES)**

## Description

The present invention, as expressed by the title of this Specification, refers to a process for the manufacture of reconstituted squid, in way of rings obtained by agglomeration of small pieces of the different eatable parts of these molluscs.

Other methods for preparation of food by treating cephalopod flesh are known. For example, in GB-A-1-511.228, a food product containing cephalopod flesh is depicted. The main characteristics in all the examples disclosed in this reference is the addition of humentants (phosphates) and binders (farinas, starches) and that the minced cephalopod is, in all cases, treated previously to being definitively shaped. Thus, sometimes the block of minced cephalopod is frozen and then cut, and in other cases a heat setting treatment is applied.

In all cases depicted in said reference the cohesion amongs the cephalopod pieces is achieved by adding binders before heat coagulation or freezing.

In the cases consisting of the addition of binders, the original flavor, taste, texture and other organoleptic factors may be altered insoas as alien substances to the cephalopod flesh are introduced. In the cases in which heat coagulation is achieved, the loss of vitamins and other desirable substances may surely happen. Alterations in the protein molecular structure also occur.

The method hereby described, consists of a process for manufacturing reconstituted squid wherein the washed eatable parts of the squid are minced and shaped into rings, characterized in that the minced squid pieces are of a size smaller than 20 mm. of side, are compacted to rings by compression at temperatures below 0°C so that cohesion among the squid pieces is achieved by the effect of surface proteins. Said cohesion is maintained once the product is unfrozen.

With this method the starting product is not altered in any way since no alien substances that can change the flavor or the texture are added. The coagulation by heating, with subsequent loss of flavor and vitamins, alterations in the protein molecular structure and other undesirable effects, are also avoided.

With the present method a final product is obtained, being as natural as the starting product.

One way of carrying out the invention is described in detail below as a preferred embodiment, wherein the following steps are performed.

- Previous preparation of the cephalopod in question, removing therefrom the non-eatable parts (viscera, eyes, beak, shell); the mantle skin can also be removed. The eatable parts (mantle, tentacles and wings) are washed until a satisfactory cleaning is achieved.

- Mincing of the different parts of the body of these cephalopods, namely mantle, tentacles, wings, mixing them in different proportions depending on the kind of product to be achieved (e.g. 60% of mantle and 40% of wings). This mincing is preferably carried out in a cutter until obtaining pieces with a size not greater than 20 mm. of side. The product temperature during the mincing process is in the range of -10°C to-3°C.

- Ring formation with a special machine, which by means of pressure applied by a piston, compacts the pieces which were obtained in the mincing process, being situated in a hopper, and it embeds then into several ring-shaped moulds, with the shape and sizes being required.

The cephalopod portions embedded in the ring-shaped mould are unmoulded by another piston which sets in the mould and which ejects them preferably with the help of under-pressure air, which comes out through several holes of this ejecting piston, the formed ring thereby falling onto a conveying belt which conveys them towards the following stages.

Said ring shape is achieved by the process, taking advantage of the cohesion produced among the cephalopod pieces when these are at an under-zero temperature, due to the high cohesion of the surface protein of each piece. The cohesion is sufficiently strong as to allow the ring shape to be kept, even despite the fact that the mould has some divisions which favour the unmoulding and that the the ring bears, in later stages, several transfers among conveying belts, with the subsequent hits which might deform it.

In order to prepare the product ready to be eaten from the rings as made by the claimed process, the ring is dipped in batter or batter-breadcrumbs. In order to achieve this, the ring is previously powdered with wheat flour, or not, according to the kind of batter to be incorporated.

The batter may include various different formulas depending on the fact that it must be fried or baked. An example thereof would be the batter constituted by a 45-60% of water; 35-40% of wheat flours; 2-4% of salt; 3-5% of gasifying substances and variable amounts of additives, such as emulsifying, thickening and colouring substances and others, even some percentages of wheat or other cereal flours. The ring is dipped into a batter bath and goes on to the next stage.

In the process of rolling the rings in breadcrumbs, they are first dipped into a bath of variable composition, such as the one comprising a 50% of water, a 25% of flour, a 25% of starch and small percentages of salt, gasifying substances and other thickening products, such as the aforementioned C.M.C., etc. They would pass afterwards through the stage at which they are coated with grated bread of different kinds, taste and granulometry, depending on the variety of the manufactured product. The rings thus rolled in bread can be either directly frozen or fried in oil in order to acquire certain characteristics.

## Claims

1. A process for manufacturing reconstituted squid wherein the washed eatable parts of the squid are minced and shaped into rings, characterized in that the minced squid pieces of a size not greater than 20 mm. of side are compacted to rings by compression at temperatures below $0^\circ$C so that cohesion among the squid pieces is achieved by the effect of the surface proteins.

## Revendications

1. Un procédé pour la fabrication de calmar reconstitué, dans lequel les parties comestibles lavées du calmar sont divisées en des anneaux fins, caractérisé en que les morceaux de calmar fins, d'une grandeur non supérieure à 20 m/m de coté, sont compactés de forme annulaire par compression, à des températures audessous de $0^\circ$C, afin d'obtenir de la cohésion entre les morceaux du calmar, par effet des protéines superficielles.

## Ansprüche

1. Verfahren zur Herstellung von rekonstruiertem Tintenfisch, wobei die gewaschenen essbaren Teile des Tintenfisches zerstückelt und zu Ringen geformt werden, dadurch gekennzeichnet, das die zerstückelten Tintenfischteile von einer Grösse von nicht mehr als 20mm durch Kompression bei Temperaturen unter $0^\circ$C zu Ringen kompaktiert werden, so dass der Zusammenhalt zwischen den Tintenfischteilen durch Wirkung der Oberflächenproteine erreicht wird.